# EUROPÄISCHE PATENTSCHRIFT

(11) **EP 3 325 790 B1**
(45) Veröffentlichungstag und Bekanntmachung des Hinweises auf die Patenterteilung: **12.05.2021**
(21) Anmeldenummer: 16731549.8
(22) Anmeldetag: 15.06.2016
(51) Int. Cl.: F02D 41/04, B60W 10/06, B60W 10/08, F02N 11/04

(54) **VERFAHREN ZUM ERMITTELN EINER DREHMOMENTGENAUIGKEIT EINES VON EINEM RIEMEN-GETRIEBENEN STARTERGENERATOR EINER BRENNKRAFTMASCHINE AUF DIE BRENNKRAFTMASCHINE ÜBERTRAGENEN DREHMOMENTS**
METHOD FOR DETERMINING THE ACCURACY OF A TORQUE TRANSMITTED FROM A BELT-DRIVEN STARTER-GENERATOR OF AN INTERNAL COMBUSTION ENGINE TO THE INTERNAL COMBUSTION ENGINE
PROCÉDÉ POUR DÉTERMINER LA PRÉCISION D'UN COUPLE TRANSMIS À UN MOTEUR À COMBUSTION INTERNE PAR UN DÉMARREUR-GÉNÉRATEUR ENTRAÎNÉ PAR COURROIE DUDIT MOTEUR À COMBUSTION INTERNE

(30) Priorität: 22.07.2015 DE 102015213763
(43) Veröffentlichungstag der Anmeldung: 30.05.2018
(73) Patentinhaber: SEG Automotive Germany GmbH, 70499 Stuttgart (DE)
(72) Erfinder: DEAK, Istvan, 71634 Ludwigsburg (DE); SCHROEDER, Bernd, 71272 Renningen (DE); HENGER, Martin, 71732 Tamm (DE); TRZEBIATOWSKI, Tobias, 70569 Stuttgart (DE); KLEIN, Benjamin, 74321 Bietigheim-Bissingen (DE); GREIS, Andreas, 70192 Stuttgart (DE); KAEPPLE, Mario, 74613 Oehringen (DE)
(74) Vertreter: Steinbauer, Florian
(86) Internationale Anmeldenummer: PCT/EP2016/063686
(87) Internationale Veröffentlichungsnummer: WO 2017/012784

(56) Entgegenhaltungen:
- WO-A1-2004/018246
- FR-A1- 2 768 666
- US-A1- 2013 297 112

## Beschreibung

Die vorliegende Erfindung betrifft ein Verfahren zum Ermitteln einer Drehmomentgenauigkeit eines von einem riemengetriebenen Startergenerator einer Brennkraftmaschine auf die Brennkraftmaschine übertragenen Drehmoments sowie eine Recheneinheit und ein Computerprogramm zu dessen Durchführung.

### Stand der Technik

Elektrische Maschinen können in Kraftfahrzeugen als sog. Startergeneratoren eingesetzt werden, um einerseits die Brennkraftmaschine im Motorbetrieb der elektrischen Maschine zu starten und andererseits Strom für das Bordnetz und zum Laden der Kraftfahrzeugbatterie im Generatorbetrieb der elektrischen Maschine zu erzeugen. Derartige elektrische Maschinen können über einen Riemen mit der Brennkraftmaschine bzw. der Kurbelwelle verbunden sein, beispielsweise über den Keilrippenriemen der Brennkraftmaschine (sog. riemengetriebene Startergeneratoren, RSG).

In der DE 10 2009 055 062 A1 wird beispielsweise ein Verfahren zur Plausibilisierung eines von einer elektrischen Maschine aufgebrachten Antriebsmomentes in einem Hybridantrieb eines Kraftfahrzeuges beschrieben. Dabei wird überprüft, ob das von der elektrischen Maschine aufgebrachte Antriebsmoment genau bestimmt ist. Das Verfahren beruht auf einer Überprüfung, ob das Drehmoment des Elektromotors dem Schleppmoment des Verbrennungsmotors entspricht.

Aus der US 2013/0297112 A1 ist ein Verfahren bekannt, bei dem Fehler bei der Drehmoment-Vorgabe überprüft werden, indem beim Auslauf der Brennkraftmaschine die elektrische Maschine von der Brennkraftmaschine mittels einer Kupplung entkoppelt wird. Anschließend wird der Drehzahlverlauf der Brennkraftmaschine ermittelt.

Aus der WO 2004/018246 A1 ist ein Verfahren bekannt, bei dem mittels einer elektrischen Maschine ein Drehmoment auf die Brennkraftmaschine übertragen werden kann, um Drehzahlungleichmäßigkeiten beim Auslauf der Brennkraftmaschine zu kompensieren.

### Offenbarung der Erfindung

Erfindungsgemäß werden ein Verfahren zum Ermitteln einer Drehmomentgenauigkeit eines von einem riemengetriebenen Startergenerator einer Brennkraftmaschine auf die Brennkraftmaschine übertragenen Drehmoments sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Unter Drehmomentgenauigkeit sei in diesem Zusammenhang zu verstehen, wie stark ein von dem riemengetriebenen Startergenerator tatsächlich übertragenes Drehmoment (Ist-Wert des übertragenen Drehmoments) von einem vorgegebenen zu übertragenden Drehmoment (Soll-Wert des übertragenen Drehmoments) abweicht. Weicht das tatsächlich übertragene von dem vorgegebene Drehmoment stärker ab als angenommen, wird die Drehmomentgenauigkeit als nicht ausreichend bzw. ungenügend angesehen.

Zum Ermitteln der Drehmomentgenauigkeit wird bei einem Auslaufen der Brennkraftmaschine während eines vorgegebenen Test-Zeitintervalls ein vorgegebenes Test-Drehmoment von dem riemengetriebenen Startergenerator auf die Brennkraftmaschine übertragen. Dieses Test-Drehmoment wird insbesondere als Soll-Wert von einer Steuerung bzw. einem Steuergerät des riemengetriebenen Startergenerator und/oder der Brennkraftmaschine vorgegeben. Beispielsweise kann das Test-Zeitintervall zwischen 100 ms und 1,5 s betragen, das Test-Drehmoment beträgt insbesondere zwischen 0,2 Nm und 2 Nm.

Unter 'Auslaufen der Brennkraftmaschine' sei in diesem Zusammenhang zu verstehen, dass die Brennkraftmaschine während ihres laufenden Betriebs deaktiviert wird und aktiv kein Drehmoment mehr erzeugt. Die Drehzahl verringert sich nach Deaktivieren der Brennkraftmaschine während des Auslaufens bis zu einem Stillstand der Brennkraftmaschine, insbesondere gemäß einem bekannten theoretischen Drehzahlverlauf.

Insbesondere findet ein Auslaufen der Brennkraftmaschine beim Abstellen des entsprechenden Kraftfahrzeugs statt, beispielsweise wenn dieses geparkt wird. Ein Auslaufen kann auch im Zuge eines sogenannten Start/Stopp-Betriebs durchgeführt werden. Im Zuge dessen kann ein automatischer Stopp der Brennkraftmaschine durchgeführt werden, beispielsweise im Stillstand des Kraftfahrzeugs (z.B. beim Stehen an einer roten Ampel) oder beim Segeln des Kraftfahrzeugs (wenn sich das Kraftfahrzeug beispielsweise auf eine rote Ampel zu bewegt).

Wenn bei dem Auslaufen das Test-Drehmoment auf die Brennkraftmaschine übertragen wird, ändert sich der Drehzahlverlauf und die Drehzahl sinkt während des Test-Zeitintervalls langsamer. Insbesondere ist ebenfalls bekannt, wie die Drehzahl während des Test-Zeitintervalls in Anbetracht des aufgeprägten Test-Drehmoments theoretisch sinken sollte.

Bei einer ausreichenden, genügenden Drehmomentgenauigkeit stimmen das vorgegebene Test-Drehmoment und das tatsächliche übertragene Drehmoment im Wesentlichen überein. Die Drehzahl sinkt in diesem Fall wie theoretisch erwartet. Bei nicht ausreichender Drehmomentgenauigkeit wird von dem riemengetriebenen Startergenerator ein tatsächliches Drehmoment übertragen, das entweder größer oder kleiner als das vorgegebene Test-Drehmoment ist. In diesem Fall weicht der Drehzahlverlauf von der theoretischen Erwartung ab.

Die Drehzahl der Brennkraftmaschine stellt in diesem Fall ein Maß dar, um die Drehmomentgenauigkeit ermitteln zu können. Daher wird während des Test-Zeitintervalls eine Drehzahlgröße, welche von der Drehzahl der Brennkraftmaschine abhängt, bestimmt und ausgewertet. Die bestimmte Drehzahlgröße wird mit einer Referenzgröße verglichen. Diese Referenzgröße charakterisiert den theoretisch erwarteten Drehzahlverlauf während des Test-Zeitintervalls in Abhängigkeit von dem Test-Drehmoment. Aus diesem Vergleich zwischen bestimmter Drehzahlgröße und Referenzgröße wird auf die Drehmomentgenauigkeit rückgeschlossen.

### Vorteile der Erfindung

Durch das Verfahren zum Ermitteln der Drehmomentgenauigkeit können Abweichungen zwischen Ist- und Soll-Drehmoment des riemengetriebenen Startergenerators auf aufwandsarme und kostengünstige Weise erkannt werden. Dabei ist es nicht nötig, das Drehmoment der Brennkraftmaschine oder des riemengetriebenen Startergenerators tatsächlich zu bestimmen.

Derartige Abweichungen können beispielsweise aufgrund von Material- und Fertigungstoleranzen von Bauteilen, z.B. Sensoren, Aktoren, usw., auftreten oder auch aufgrund von Alterungs- bzw. Verschleißerscheinungen. Beispielsweise kann eine strukturelle Veränderung des Riemens, z.B. eine Längung des Riemens (insbesondere durch Alterung des Zugcordes) oder ein Verschleiß des Riemens (z.B. Verschleiß der Riemenoberfläche, insbesondere der Rippen, wodurch der Riemen für den Riementrieb länger wird) zu derartigen Abweichungen führen. Abweichungen können auch aufgrund von aktuellen Umweltbedingungen auftreten, beispielsweise aufgrund der Umgebungstemperatur.

Diese Abweichungen können durch das Verfahren während des laufenden Betriebs des Kraftfahrzeugs erkannt werden. Es ist nicht nötig, den riemengetriebenen Startergenerator bzw. dessen Bauteile einzeln beispielsweise im Zuge von regelmäßigen Servicearbeiten in einer Werkstatt auf Alterungs- bzw. Verschleißerscheinungen oder Material- und Fertigungstoleranzen zu testen. Die Ermittlung der Drehmomentgenauigkeit kann beispielsweise im Zuge eines jeden Auslaufens des Kraftfahrzeugs durchgeführt werden, beispielsweise jedes Mal, wenn das Kraftfahrzeug an einer roten Ampel steht, oder auch nach vorgegebenen auslösenden Ereignissen, z.B. etwa einmal pro Woche, oder bei jedem ersten Auslaufen nach jeweils 100 Fahrstunden oder nach jeweils 1000 km. Die Ermittlung der Drehmomentgenauigkeit kann jedoch auch als Servicefunktion aktiviert werden, um das Verhalten des Kraftfahrzeugs auf neue Fahrzeugteile (z.B. Keilrippenriemen) im Rahmen einer Reparatur anzulernen.

Vorteilhafterweise wird, wenn auf eine nicht ausreichende Drehmomentgenauigkeit rückgeschlossen wird, eine Kompensation bzw. Korrektur des von dem riemengetriebenen Startergenerator übertragenen Drehmoments durchgeführt. Beispielsweise kann das vorgegebene Test-Drehmoment im Zuge der Korrektur während weiterer Test-Zeitintervalle jeweils so lange verändert werden und die Drehmomentgröße kann während dieser weiteren Test-Zeitintervalle so lange ausgewertet werden, bis die Drehmomentgenauigkeit während eines dieser Test-Zeitintervalle ausreichend hoch ist. Insbesondere wird das Test-Drehmoment so lange verändert, bis die Drehzahl während eines dieser Test-Zeitintervalle gemäß der theoretischen Erwartung sinkt.

Insbesondere kann im Zuge dieser Korrektur ein Korrekturfaktor bestimmt werden, welcher angibt, um wie viel tatsächlich übertragenes und vorgegebenes Drehmoment voneinander abweichen. Beispielsweise ergibt sich dieser Korrekturfaktor als Quotient aus demjenigen Test-Drehmoment, bei welchem auf eine ausreichend hohe Drehmomentgenauigkeit rückgeschlossen wird, dividiert durch das zu Beginn des Verfahrens vorgegebenen Test-Drehmoment. Das zu übertragende Drehmoment kann daraufhin mit diesem Korrekturfaktor beaufschlagt werden.

Fertigungs- und Materialtoleranzen sowie Alterungs- bzw. Verschleißerscheinungen werden somit implizit berücksichtigt, ohne dabei aufwendige und kostenintensive Reparaturen oder mechanische Eingriffe vorzunehmen. Weiterhin kann eine gleichbleibende Qualität des riemengetriebenen Startergenerators gewährleistet werden. Insbesondere wird gewährleistet, dass in einem Boost-Rekuperations-Modus exakt ein gewünschtes Drehmoment von der Brennkraftmaschine auf den riemengetriebenen Startergenerator übertragen wird, um Energie in einer Batterie zu speichern, und dass nicht ungewollt zu viel Drehmoment übertragen wird, was zu unerwünschten Leistungseinbußen der Brennkraftmaschine führen kann. Analog kann gewährleistet werden, dass bei Unterstützung der Brennkraftmaschine durch die elektrische Maschine ein gewünschtes Drehmoment von dem riemengetriebenen Startergenerator auf die Brennkraftmaschine übertragen wird. Insbesondere wird somit verhindert, dass es zu einer Beeinträchtigung des Fahrgefühls durch ungewollte Drehmomentsprünge kommt.

Beispielsweise wenn die Brennkraftmaschine als ein Dieselmotor ausgebildet ist, kann der riemengetriebene Startergenerator zum verbesserten Freibrennen eines NOₓ-Speicherkatalysators verwendet werden. Der Betriebspunkt des Dieselmotors kann dabei zu höheren Lasten verschoben werden. Überschüssige Leistung kann durch den riemengetriebene Startergenerator rekupiert und in der Batterie zwischengespeichert werden. Die gespeicherte Energie kann bei Bedarf durch "Boosten" wieder in motorisches Moment umgewandelt werden. Durch derartige dynamische Drehmomentunterstützung kann eine innermotorische Reduktion der NOₓ-Emissionen erzielt werden. Durch das Verfahren kann gewährleistet werden, dass durch hohe Drehmomentgenauigkeit der entsprechende gewünschte Effekt erzielt wird.

Gemäß einer vorteilhaften Ausführung wird die Drehzahl selbst bzw. ein Drehzahlverlauf als Drehzahlgröße bestimmt. Prinzipbedingte, zyklische Schwingungen des Drehzahlverlaufs einer Brennkraftmaschine können durch geeignete Filter berücksichtigt werden, damit die Drehzahl im Sinne des Verfahrens richtig gedeutet wird. Es können jedoch auch andere Größen als Drehzahlgröße bestimmt werden, beispielsweise das Drehmoment oder eine Schwingungsfrequenz der Brennkraftmaschine bzw. deren Verläufe. Die Drehzahl wird zumeist ohnehin im Zuge des regulären Betriebs der Brennkraftmaschine bestimmt, wodurch keine zusätzlichen Sensoren oder Rechenoperationen notwendig sind. Als Drehzahlgröße kann weiterhin eine Steigung der Drehzahl bestimmt werden.

Vorzugsweise wird im Zuge des Vergleiches zwischen bestimmter Drehzahlgröße und Referenzgröße überprüft, ob die Drehzahl während des Test-Zeitintervalls gemäß einem theoretischen Referenzverlauf abfällt. Wenn dies nicht der Fall ist, wird vorzugsweise auf eine nicht ausreichende Drehmomentgenauigkeit rückgeschlossen. Anhand Drehzahlgröße wird vorzugsweise überprüft, ob die Drehzahl während des Test-Zeitintervalls gemäß einem theoretisch erwarteten Referenz-Drehzahlverlauf abfällt. Sinkt die Drehzahl während des Test-Zeitintervalls nicht gemäß diesem Referenz-Drehzahlverlauf, sondern schneller oder langsamer, wird rückgeschlossen, dass das tatsächlich von dem riemengetriebenen Startergenerator übertragene Drehmoment nicht mit dem vorgegebe-nen Test-Drehmoment übereinstimmt und dass die Drehmomentgenauigkeit nicht ausreichend ist.

Gemäß einer bevorzugten Ausführungsform wird eine statistische Auswertung einer Vielzahl von bestimmten Drehzahlgrößen durchgeführt, die insbesondere über einen bestimmten Zeitraum gesammelt wird. Insbesondere wird bei einer Vielzahl von Auslaufvorgängen der Brennkraftmaschine jeweils ein Wert für die Drehzahlgröße bestimmt. Diese unterschiedlichen Werte für die Drehzahlgröße werden beispielsweise jeweils in einem Speicherbereich eines Steuergeräts hinterlegt. Beispielsweise kann ein Mittelwert dieser einzelnen Werte der Drehzahlgröße bestimmt und ausgewertet werden. Somit können kurzzeitige Schwankungen in der Drehmomentgenauigkeit, beispielsweise aufgrund von schwankender Motortemperatur, ausgemittelt werden und nur eine langzeitige Veränderung der Drehmomentgenauigkeit kann berücksichtigt werden. Auf diese Weise kann insbesondere auf Alterungs- bzw. Verschleißerscheinungen des Riemens geschlossen werden, wie z.B. Längung oder Verschleiß des Riemens. Vorzugsweise wird eine Zeitreihenanalyse der Vielzahl von bestimmten Drehzahlgrößen durchgeführt. Durch die Zeitreihenanalyse kann insbesondere ein Trend bzw. eine Trendlinie der Drehzahlgröße bestimmt werden.

Vorteilhafterweise wird das Ergebnis der Auswertung der Drehzahlgröße bzw. die ausgewertete Drehzahlgröße mit Hilfe statistischer Funktionen auf Plausibilität geprüft. Unplausible Messwerte, welche beispielsweise durch nicht beeinflussbare Randbedingungen, wie etwa Temperaturschwankungen, entstehende können, können somit erkannt und aussortiert bzw. ignoriert werden.

Eine erfindungsgemäße Recheneinheit, ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch einen Riementrieb eines Kraftfahrzeugs mit Brennkraftmaschine und riemengetriebenem Startergenerator, der dazu eingerichtet ist, eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als Blockdiagramm.
- Figur 3: zeigt schematisch Diagramme einer Drehzahl einer Brennkraftmaschine, aufgetragen gegen die Zeit, die im Zuge einer bevorzugten Ausführungsform eines erfindungsgemäßen Verfahrens bestimmt werden können.

### Ausführungsform(en) der Erfindung

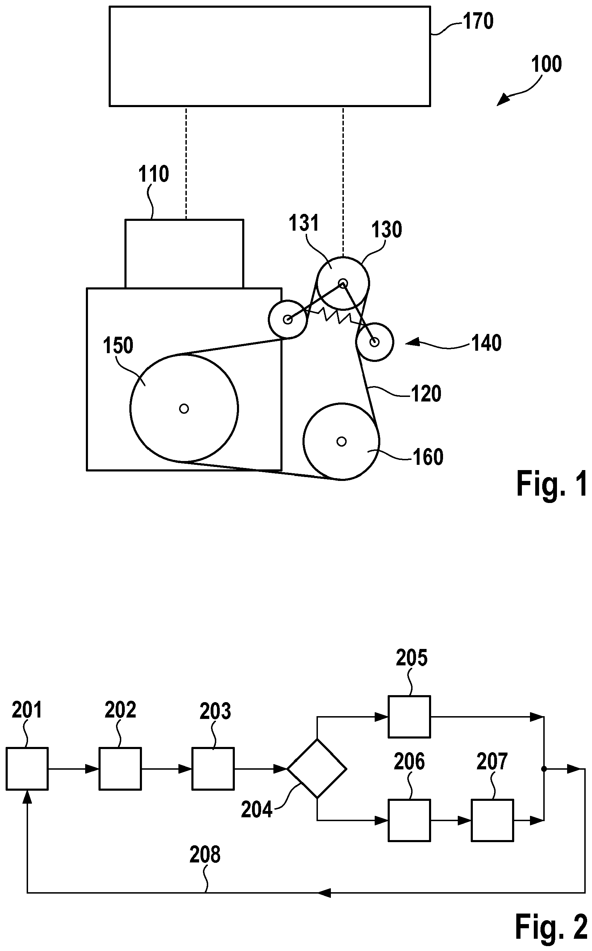

In Figur 1 ist ein Riementrieb eines Kraftfahrzeugs schematisch dargestellt und mit 100 bezeichnet. Eine Brennkraftmaschine 110 des Kraftfahrzeugs weist eine Kurbelwelle auf, die drehfest mit einem Kurbelwellen-Antriebsrad 150 verbunden ist. Das Kurbelwellen-Antriebsrad 150 ist beispielsweise als Riemenscheibe ausgebildet.

Über einen Riemen 120, beispielsweise über einen Keilrippenriemen, ist die Brennkraftmaschine 110 mit einem riemengetriebenen Startergenerator 130 Drehmoment übertragend verbunden. Der Riemen 120 greift insbesondere kraft- und/oder formschlüssig in das Kurbelwellen-Antriebsrad 150 und in ein Antriebsrad 131 des Startergenerators 130 ein. Das Antriebsrad 131 ist drehfest mit einem Rotor des Startergenerators 130 verbunden. Die Brennkraftmaschine 110 kann über den Riemen 120 mit weiteren Komponenten 160, wie Ventilatoren oder Kühlmittelpumpen, verbunden sein. Weiterhin kann ein Riemenspanner 140 vorgesehen sein, um den Riemen 120 vorzuspannen.

Ein Steuergerät 170 ist zur Steuerung der Brennkraftmaschine 110 und des Startergenerators 130 eingerichtet. Das Steuergerät 170 ist insbesondere dazu eingerichtet, eine bevorzugte Ausführungsform des erfindungsgemäßen Verfahrens durchzuführen, welche in Figur 2 schematisch als ein Blockdiagramm dargestellt ist.

Das Kraftfahrzeug wird dabei regulär beispielsweise im Straßenverkehr betrieben. In Schritt 201 wird die Brennkraftmaschine 110 beispielsweise im Zuge eines Start/Stopp-Betriebs deaktiviert, etwa weil das Kraftfahrzeug an einer roten Ampel zum Stillstand kommt. Die Brennkraftmaschine 110 läuft daraufhin aus, die Drehzahl sinkt bis zum Stillstand der Brennkraftmaschine 110 ab.

In Schritt 202 wird von dem Steuergerät 170 ein Test-Drehmoment von beispielsweise 1 Nm vorgegeben. Das Steuergerät 170 steuert den Startergenerator 130 an, damit dieser während eines vorgegebenen Test-Zeitintervalls von beispielsweise 100 ms das vorgegebene Test-Drehmoment über den Riemen 120 auf die Brennkraftmaschine überträgt.

Es ist insbesondere bekannt, wie die Drehzahl der Brennkraftmaschine 110 nach dem Deaktivieren theoretisch abfallen sollte. Ebenso ist bekannt, wie die Drehzahl in Abhängigkeit von dem aufgeprägten Test-Drehmoment während des Test-Zeitintervalls theoretisch abfallen sollte. Somit ist ein während des Test-Zeitintervalls theoretisch erwarteter Referenz-Drehzahlverlauf bekannt.

Wenn das tatsächlich von dem Startergenerator 130 auf die Brennkraftmaschine 110 übertragene Drehmoment dem vorgegebenen Test-Drehmoment entspricht, sollte die Drehzahl während des Test-Zeitintervalls gemäß dem Referenz-Drehzahlverlauf absinken. Weichen tatsächlich übertragenes Drehmoment (Ist-Drehmoment) und vorgegebenes Test-Drehmoment (Soll-Drehmoment) voneinander ab, beispielsweise aufgrund von Alterungs- bzw. Verschleißerscheinungen oder Material- und Fertigungstoleranzen, sinkt die Drehzahl während des Test-Zeitintervalls schneller oder langsamer als der Referenz-Drehzahlverlauf.

In Schritt 203 wird daher während des Test-Zeitintervalls die Drehzahl der Brennkraftmaschine 110 als Drehzahlgröße bestimmt. In Schritt 204 wird die bestimmte Drehzahl ausgewertet und mit dem Referenz-Drehzahlverlauf als Referenzgröße verglichen. Dabei wird insbesondere überprüft, ob die Drehzahl während des Test-Zeitintervalls gemäß dem Referenz-Drehzahlverlauf absinkt oder nicht. Daraus wird auf eine Drehmomentgenauigkeit des vom Startergenerator 130 auf die Brennkraftmaschine 110 übertragenen Drehmoments rückgeschlossen.

Sinkt die Drehzahl während des Test-Zeitintervalls gemäß dem Referenz-Drehzahlverlauf, wird in Schritt 205 rückgeschlossen, dass die Drehmomentgenauigkeit ausreichend hoch ist. Sinkt die Drehzahl während des Test-Zeitintervalls nicht gemäß dem Referenz-Drehzahlverlauf, weichen tatsächliches übertragenes Drehmoment und vorgegebenes Test-Drehmoment voneinander ab. In diesem Fall wird in Schritt 206 rückgeschlossen, dass die Drehmomentgenauigkeit nicht ausreichend hoch ist. In diesem Fall wird in Schritt 207 eine Korrektur des vom Startergenerator 130 übertragenen Drehmoments durchgeführt. Dabei wird in Schritt 207 das vorgegebene Test-Drehmoment während weiterer Test-Zeitintervalle von jeweils 100 ms während desselben und/oder insbesondere während anderer späterer Auslaufvorgänge so lange verändert, bis die Drehzahl während eines dieser Test-Zeitintervalle gemäß dem Referenz-Drehzahlverlauf sinkt und die Drehmomentgenauigkeit somit ausreichend hoch ist.

Weiterhin kann ein Korrekturfaktor bestimmt werden, der angibt, wie stark das tatsächlich übertragene Drehmoment von dem vorgegebenen Test-Drehmoment abweicht. Beispielsweise wird als Korrekturfaktor ein Quotient aus demjenigen Test-Drehmoment bestimmt, bei welchem die Drehzahl während des entsprechenden Test-Zeitintervalls gemäß dem Referenz-Drehzahlverlauf abfällt, dividiert durch das Test-Drehmoment, welches gemäß Schritt 202 vorgegeben wurde. Dieser Korrekturfaktor wird in Zukunft bei der Ansteuerung des Startergenerators 130 berücksichtigt.

Das Verfahren wird insbesondere abgebrochen, wenn sich in den Schritten 201 bis 204 die Drehzahl aufgrund einer Fahreranforderung (z.B. Re-Start) wieder erhöht. In allen Fällen, sowohl bei Abbruch als auch bei ausreichender bzw. nicht ausreichender Drehmomentgenauigkeit, wird das Verfahren zum Ermitteln der Drehmomentgenauigkeit wiederholt, sobald sich die Brennkraftmaschine 110 erneut im Auslauf befindet, angedeutet durch Bezugszeichen 208. Die in dem jeweiligen Schritt 203 bestimmte und ausgewertete Drehzahl kann in einem Speicherbereich des Steuergeräts 170 hinterlegt und für eine Zeitreihenanalyse verwendet werden. Durch nicht beeinflussbare Randbedingungen entstehende unplausible Messwerte können so mit Hilfe statistischer Funktionen erkannt und ignoriert werden.

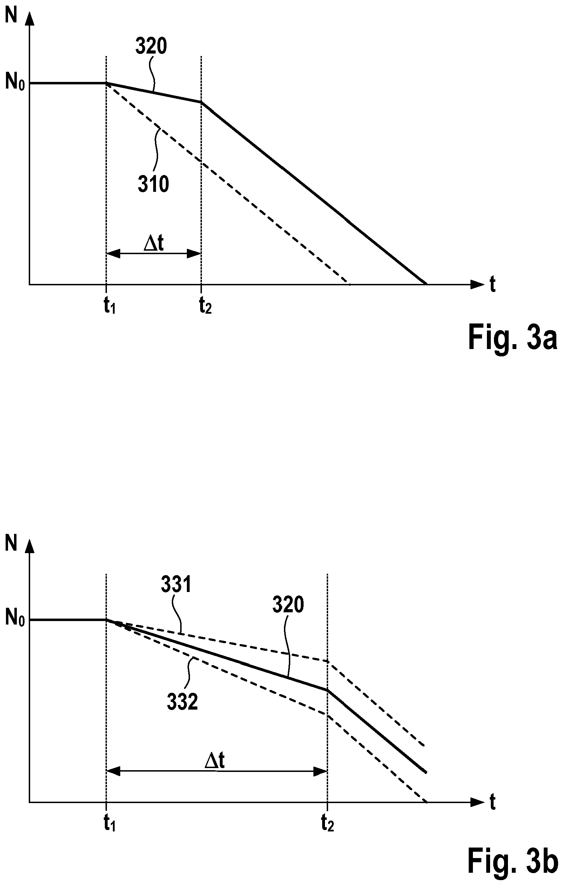

In Figur 3 sind Diagramme der Drehzahl N der Brennkraftmaschine 110, aufgetragen gegen die Zeit t, schematisch dargestellt, welche im Zuge einer bevorzugten Ausführungsform des erfindungsgemäßen Verfahrens bestimmt werden können.

In den in Figur 3 dargestellten Diagrammen wird die Brennkraftmaschine 110 zu einem Zeitpunkt t₁ gemäß Schritt 201 deaktiviert. Vor dem Zeitpunkt t₁ wird die Brennkraftmaschine 110 beispielsweise im Leerlauf bei einer Leerlaufdrehzahl N₀ von z.B. 700 U/min betrieben. Nach Deaktivieren der Brennkraftmaschine 110 läuft diese aus und die Drehzahl sinkt bis auf null gemäß der in Figur 3a gezeigten Kurve 310.

Wird zwischen dem Zeitpunkt t₁ und dem Zeitpunkt t₂ während des Test-Zeitintervalls Δt von 100 ms das Test-Drehmoment von 1 Nm aufgeprägt, ändert sich der Drehzahlverlauf und die Drehzahl sinkt während des Test-Zeitintervalls Δt von der Leerlaufdrehzahl N₀ gemäß der in Figur 3a dargestellten Kurve 320.

Kurve 320 entspricht in diesem Beispiel dem Fall, dass tatsächlich übertragenes Drehmoment und vorgegebenes Test-Drehmoment übereinstimmen und dass die Drehmomentgenauigkeit ausreichend hoch ist, analog zu Schritt 206. Die Kurve 320 zwischen dem Zeitpunkt t₁ und dem Zeitpunkt t₂ während des Test-Zeitintervalls Δt stellt somit die Referenz-Drehzahlkurve dar.

In Figur 3b ist die Kurve 320 analog zu Figur 3a schematisch dargestellt. Analog zu Figur 3a wird zwischen dem Zeitpunkt t₁ und dem Zeitpunkt t₂ während des Test-Zeitintervalls Δt von 100 ms das Test-Drehmoment von 1 Nm aufgeprägt.

Kurve 331 in Figur 3b entspricht beispielsweise dem Fall, dass das tatsächlich übertragene Drehmoment größer als das vorgegebene Test-Drehmoment ist, analog zu Schritt 206. Die Drehmomentgenauigkeit ist somit nicht ausreichend. Die Drehzahl N sinkt gemäß Kurve 331 während des Test-Zeitintervalls Δt weniger steil als im Fall des Referenz-Drehzahlverlaufs gemäß Kurve 320.

Kurve 332 in Figur 3b entspricht beispielsweise dem Fall, dass das tatsächlich übertragene Drehmoment kleiner als das vorgegebene Test-Drehmoment ist, analog zu Schritt 206. Die Drehmomentgenauigkeit ist dabei ebenfalls nicht ausreichend. Die Drehzahl N sinkt gemäß Kurve 332 während des Test-Zeitintervalls Δt steiler als im Fall des Referenz-Drehzahlverlaufs gemäß Kurve 320.

## Patentansprüche

1. Verfahren zum Ermitteln einer Drehmomentgenauigkeit eines von einem riemengetriebenen Startergenerator (130) einer Brennkraftmaschine (110) auf die Brennkraftmaschine (110) übertragenen Drehmoments,
- wobei bei einem Auslaufen der Brennkraftmaschine (110) von dem riemengetriebenen Startergenerator (130) während eines vorgegebenen Test-Zeitintervalls (Δt) ein vorgegebenes Test-Drehmoment auf die Brennkraftmaschine (110) übertragen wird (202),
- wobei während des Test-Zeitintervalls (Δt) eine Drehzahlgröße, welche von einer Drehzahl (N) der Brennkraftmaschine (110) abhängt, bestimmt (203) und mit einer Referenzgröße (320) verglichen wird (204),
- wobei im Zuge des Vergleiches zwischen bestimmter Drehzahlgröße und Referenzgröße überprüft wird, ob die Drehzahl (N) der Brennkraftmaschine (110) während des Test-Zeitintervalls (Δt) gemäß einem theoretischen Referenzverlauf (320) abfällt, und
- wobei aus diesem Vergleich auf die Drehmomentgenauigkeit rückgeschlossen wird (205, 206).

2. Verfahren nach Anspruch 1, wobei, wenn auf eine nicht ausreichende Drehmomentgenauigkeit rückgeschlossen wird (206), eine Korrektur des von dem riemengetriebenen Startergenerator (130) übertragenen Drehmoments durchgeführt wird (207).

3. Verfahren nach Anspruch 1 oder 2, wobei, wenn die Drehzahl (N) der Brennkraftmaschine (110) während des Test-Zeitintervalls (Δt) nicht gemäß dem theoretischen Referenzverlauf (320) abfällt, auf eine nicht ausreichende Drehmomentgenauigkeit rückgeschlossen wird (206).

4. Verfahren nach einem der vorstehenden Ansprüche, wobei eine statistische Auswertung einer Vielzahl von bestimmten Drehzahlgrößen durchgeführt wird.

5. Verfahren nach Anspruch 4, wobei eine Zeitreihenanalyse der Vielzahl von bestimmten Drehzahlgrößen durchgeführt wird.

6. Verfahren nach einem der vorstehenden Ansprüche, wobei die ausgewertete Drehzahlgröße mit Hilfe statistischer Funktionen auf Plausibilität geprüft wird.

7. Verfahren nach einem der vorstehenden Ansprüche, wobei die Drehzahl (N) der Brennkraftmaschine (110) als Drehzahlgröße bestimmt (203) und ausgewertet wird (204).

8. Steuergerät (170) einer Brennkraftmaschine, das dazu eingerichtet ist, ein Verfahren nach einem der vorstehenden Ansprüche durchzuführen.

9. Computerprogramm, das ein Steuergerät (170) einer Brennkraftmaschine dazu veranlasst, ein Verfahren nach einem der Ansprüche 1 bis 7 durchzuführen, wenn es auf dem Steuergerät (170) ausgeführt wird.

10. Maschinenlesbares Speichermedium mit einem darauf gespeicherten Computerprogramm nach Anspruch 9.

## Claims

1. A method for determining a torque accuracy of a torque transmitted from a belt-driven starter generator (130) of an internal combustion engine (110) to the internal combustion engine (110),
- wherein during a run-down of the internal combustion engine (110), a predetermined test torque is transmitted (202) from the belt-driven starter generator (130) to the internal combustion engine (110) during a predetermined test time interval (Δt),
- wherein during the test time interval (Δt) a rotation speed variable which depends on a rotation speed (N) of the internal combustion engine (110) is determined (203) and compared (204) with a reference variable (320),
- wherein in the course of the comparison between the determined rotation speed variable and the reference variable it is checked whether the rotation speed (N) of the internal combustion engine (110) drops during the test time interval (Δt) in accordance with a theoretical reference curve (320), and
- wherein the torque accuracy is inferred (205, 206) from this comparison.

2. The method according to claim 1, wherein, if insufficient torque accuracy is inferred (206), a correction of the torque transmitted by the belt-driven starter generator (130) is carried out (207).

3. The method according to claim 1 or 2, wherein, if the rotation speed (N) of the internal combustion engine (110) does not drop according to the theoretical reference curve (320) during the test time interval (Δt), insufficient torque accuracy is inferred (206).

4. The method according to one of the preceding claims, wherein a statistical evaluation of a plurality of determined rotation speed variables is performed.

5. The method according to claim 4, wherein a time series analysis of the plurality of determined rotation speed variables is performed.

6. The method according to any one of the preceding claims, wherein the evaluated rotation speed variable is checked for plausibility using statistical functions.

7. The method according to one of the preceding claims, wherein the rotation speed (N) of the internal combustion engine (110) is determined (203) and evaluated (204) as a rotation speed variable.

8. A control unit (170) of an internal combustion engine, which is arranged to perform a method according to any one of the preceding claims.

9. A computer program that causes a control unit (170) of an internal combustion engine to perform the method according to any of claims 1 to 7, when executed on the control unit (170).

10. A machine-readable storage medium having a computer program stored thereon according to claim 9.

## Revendications

1. Procédé pour déterminer une exactitude de couple d'un couple transmis par un générateur de démarreur (130) entraîné par courroie d'un moteur à combustion interne (110), audit moteur à combustion interne (110),
dans lequel lors d'une marche par inertie du moteur à combustion interne (110) à partir du générateur de démarreur (130) entraîné par courroie pendant un intervalle de temps de test (Δt) prédéfini, un couple de test prédéfini est transmis (202) au moteur à combustion interne (110),
dans lequel pendant l'intervalle de temps de test (Δt), une grandeur de vitesse de rotation, qui dépend d'une vitesse de rotation (N) du moteur à combustion interne (110), est déterminée (203) et comparée (204) à une grandeur de référence (320),
dans lequel, au cours de la comparaison entre la grandeur de vitesse de rotation déterminée et la grandeur de référence, il est vérifié si la vitesse de rotation (N) du moteur à combustion interne (110) pendant l'intervalle de temps de test (Δt) diminue d'après une courbe de référence théorique (320), et
dans lequel l'exactitude du couple est déduite (205, 206) de cette comparaison.

2. Procédé selon la revendication 1, dans lequel, lorsqu'il est déduit (206) qu'une exactitude de couple n'est pas suffisante, une correction du couple transmis par le générateur de démarreur (130) entraîné par courroie est effectuée (207).

3. Procédé selon la revendication 1 ou 2, dans lequel, lorsque la vitesse de rotation (N) du moteur à combustion interne (110) pendant l'intervalle de temps de test (Δt) ne diminue pas d'après la courbe de référence théorique (320), il est déduit (206) que l'exactitude du couple n'est pas suffisante.

4. Procédé selon l'une des revendications précédentes, dans lequel une évaluation statistique d'une pluralité de grandeurs de vitesse de rotation définies est effectuée.

5. Procédé selon la revendication 4, dans lequel une analyse de séries chronologiques de la pluralité de grandeurs de vitesse de rotation déterminées est effectuée.

6. Procédé selon l'une des revendications précédentes, dans lequel la plausibilité de la grandeur de vitesse de rotation évaluée est contrôlée à l'aide de fonctions statistiques.

7. Procédé selon l'une des revendications précédentes, dans lequel la vitesse de rotation (N) du moteur à combustion interne (110) est déterminée (203) comme grandeur de vitesse de rotation et évaluée (204).

8. Commande (170) d'un moteur à combustion interne, configurée pour mettre en œuvre un procédé selon l'une des revendications précédentes.

9. Programme informatique qui permet à une commande (170) d'un moteur à combustion interne de mettre en œuvre un procédé selon l'une des revendications 1 à 7, lorsqu'il est exécuté sur la commande (170).

10. Support de mémoire lisible par machine sur lequel est stocké un programme informatique selon la revendication 9.
